# EUROPEAN PATENT SPECIFICATION

(11) **EP 4 405 314 B1**
(45) Date of publication and mention of the grant of the patent: **01.10.2025**
(21) Application number: 22789682.6
(22) Date of filing: 23.09.2022
(51) Int. Cl.: C04B 35/83, F16D 69/02

(54) **METHOD FOR MANUFACTURING A BRAKE PAD PREFORM AND A BRAKE PAD, AND RELATED BRAKE PAD**
VERFAHREN ZUR HERSTELLUNG EINER BREMSBELAGVORFORM UND EINES BREMSBELAGS UND ZUGEHÖRIGER BREMSBELAG
PROCÉDÉ DE FABRICATION DE PRÉFORME DE PLAQUETTE DE FREIN ET DE PLAQUETTE DE FREIN, ET PLAQUETTE DE FREIN ASSOCIÉE

(30) Priority: 24.09.2021 IT 202100024540
(43) Date of publication of application: 31.07.2024
(73) Proprietor: Brembo S.p.A., 24035 Curno (Bergamo) (IT)
(72) Inventor: ROSA, Massimo, 24035 Curno, BERGAMO (IT); CIVIDINI, Omar, 24035 Curno, BERGAMO (IT)
(74) Representative: De Lorenzo, Danilo
(86) International application number: PCT/IB2022/059019
(87) International publication number: WO 2023/047350

(56) References cited:
- EP-A1- 2 310 714
- EP-A2- 1 911 990
- EP-A2- 2 157 068
- EP-B1- 2 310 714
- CN-A- 110 998 127
- US-A- 5 306 678
- US-A- 6 110 268
- US-A1- 2006 151 912
- US-B2- 7 871 592

## Description

### Field of the invention

The present invention relates to a method for manufacturing a brake pad preform, in particular for disc brakes, a method for manufacturing a brake pad and the aforesaid brake pad.

### Prior art

The use of disc brake pads made of carbon-based materials, so-called carbon-carbon or "C/C" composites, is known. These are pads made of composite materials composed of reinforcing carbon fibers within a carbonaceous matrix. Said pads are adapted to cooperate with a disc for disc brakes, generally also made of "C/C" material.

Carbon-carbon composites are lightweight materials which are used for the manufacture of brake pads when the dissipation of a large amount of energy is required (for example racing cars or aerospace vehicles). The frictional behavior of these materials may be greatly improved by introducing a small amount of abrasive particles, which act as tribological modifiers by increasing the friction coefficient at low temperatures. For this reason, controlling the amount, distribution and size of the abrasive is of paramount importance in the manufacture of carbon-carbon friction components.

Current manufacturing methods for carbon-carbon composites doped with abrasive particles provide for the infiltration of the carbonaceous part with a silica colloid, which is subsequently converted into silicon carbide (SiC) through a carbothermic reaction. An example of such manufacturing methods is described in US 6 110 268 A, EP 2 310 714 A1, as well as in EP1763644A1.

Disadvantageously, the brake pads obtained by means of the aforesaid methods (as the one disclosed in US 5 306 678 A) suffer from an uneven distribution of the particles in the carbonaceous part, since the concentration of silicon carbide (SiC) progressively decreases from the surfaces towards the core of the brake pad. This results in an undesired variable performance of the brake pad over time, as a consequence of the wear of the pad which exposes regions of the brake pad that are increasingly depleted of silicon carbide (i.e. of the abrasive portion).

Furthermore, inconveniently, the manufacturing methods of the prior art do not allow for adequate control of the size of the abrasive particles (of silicon carbide). Furthermore, the morphology of the particles depends on the size of the starting particles of the silica, and also on their agglomeration after the infiltration process and on the contact surface between the silica and carbon. This typically produces a wide particle size distribution, which is however contrary to the need to keep the abrasive performance of the brake pad constant (the friction coefficient of the material requires particles with uniform shape and narrow range diameters).

Furthermore, in the manufacturing methods of the prior art, as a consequence of the high operating temperatures (greater than 1400 °C) in the step of heat conversion of silica into silicon carbide, silicon monoxide (SiO) is produced which condenses and accumulates on the cold areas of the furnaces (for example on gaskets, pumps, filters and pipes). This requires careful and expensive cleaning operations after the heat treatment and considerably reduces the life of some components of the furnace.

Therefore, the problem underlying the present invention is that of providing a disc brake pad which overcomes the drawbacks of the prior art and which maintains high performance characteristics even in extreme applications, and a process for obtaining it which is conveniently feasible. More specifically, the present invention proposes to modify the braking action of the pads themselves through a more uniform distribution of the quantity and size of the abrasive particles, in order to obtain abrasive performance of the brake pad that is as constant as possible.

### Summary of the invention

The need is therefore felt in the sector to have a method for manufacturing brake pad preforms and brake pads which are capable of solving the aforementioned drawbacks of the prior art. In particular, the need is felt to implement a brake pad which has a performance that is as uniform as possible as a function of wear over time and which at the same time may be manufactured in a more efficient and convenient manner; all this while maintaining or improving the high performance characteristics of "C/C" composites.

The above needs are met by a method for manufacturing a brake pad preform, by a method for manufacturing a brake pad and by a brake pad for disc brakes according to the appended independent claims, the definitions of which form an integral part of the present description.

According to the invention, the method for manufacturing a brake pad preform for disc brakes comprises the following operational steps:
a) preparing a thermosetting mixture by mixing a polymer resin in liquid form or particle powder form and ceramic particles in powder form;
b) combining the thermosetting mixture obtained in step a) with a carbonaceous material composed by carbon fibers to obtain a molding compound;
c) molding the molding compound obtained in step b), for example in a mold for brake pads preforms, by means of compacting and heat treatment to obtain a crude preform;
d) subjecting the crude preform obtained in step c) to a pyrolysis treatment to obtain a brake pad preform.

An alternative variant of the method provides a step a1), replacing step a), wherein a thermosetting mixture is prepared by mixing a polymer resin in liquid or solid particle form and a liquid preceramic resin, as a precursor of ceramic particles. In this alternative variant of the method, ceramic particles are formed starting from the preceramic liquid resin during the heat treatment of step c) or during step d).

Furthermore, a brake pad for disc brakes according to the present invention is composed of a carbon-carbon composite which is composed of a matrix of carbonaceous material (or carbonaceous matrix) and carbon fibers. Furthermore, ceramic particles are uniformly dispersed in the carbonaceous matrix.

Further features and advantages of the invention will appear more clearly from the description of some preferred embodiments thereof, given hereinafter by way of nonlimiting example only.

### Brief description of the figures

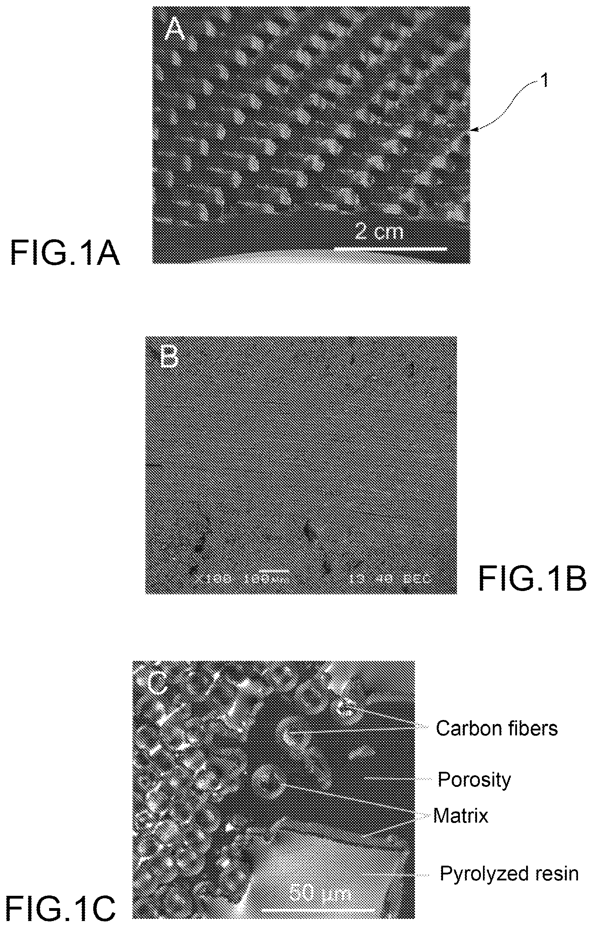

Fig. 1A shows an axonometric view from above of a portion of a disc brake pad according to an embodiment of the invention;
Fig. 1B shows an image obtained with a scanning electron microscope (SEM) of a cross section of the brake pad of Fig. 1A;
Fig. 1C shows an image obtained with an optical microscope of a portion of the cross section of Fig. 1B, in which carbon fibers, carbon formed by CVI process (indicated as a CVI matrix), carbon formed by pyrolysis of polymers (indicated as pyrolyzed resin) and residual porosity are indicated.
Fig. 2A shows an image obtained with a scanning electron microscope (SEM) of a portion of a brake pad preform close to the outermost surface of the preform, obtained according to a manufacturing method of the prior art;
Fig. 2B shows an image obtained with a scanning electron microscope (SEM) of a portion of the brake pad preform of Fig. 2A, but in proximity to the innermost core of the preform;
Fig. 3A shows an image obtained with a scanning electron microscope (SEM) of a portion of a brake pad preform obtained according to the method for manufacturing a brake pad preform according to an embodiment of the invention, close to the outermost surface of the preform;
Fig. 3B shows an image obtained with a scanning electron microscope (SEM) of a portion of the brake pad preform of Fig. 3A, but in proximity to the innermost core of the preform;

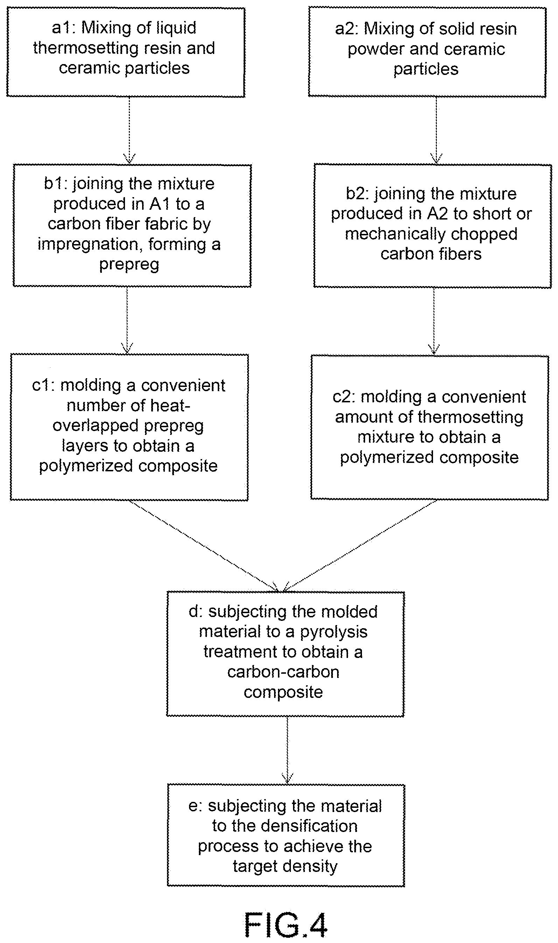

Fig. 4 shows a summary block diagram of the method for manufacturing a brake pad preform according to a first embodiment of the invention (blocks A1, B1, C1, D and E) and according to a second embodiment of the method according to the invention (blocks A2, B2, C2, D and E), which is an alternative to the first embodiment;

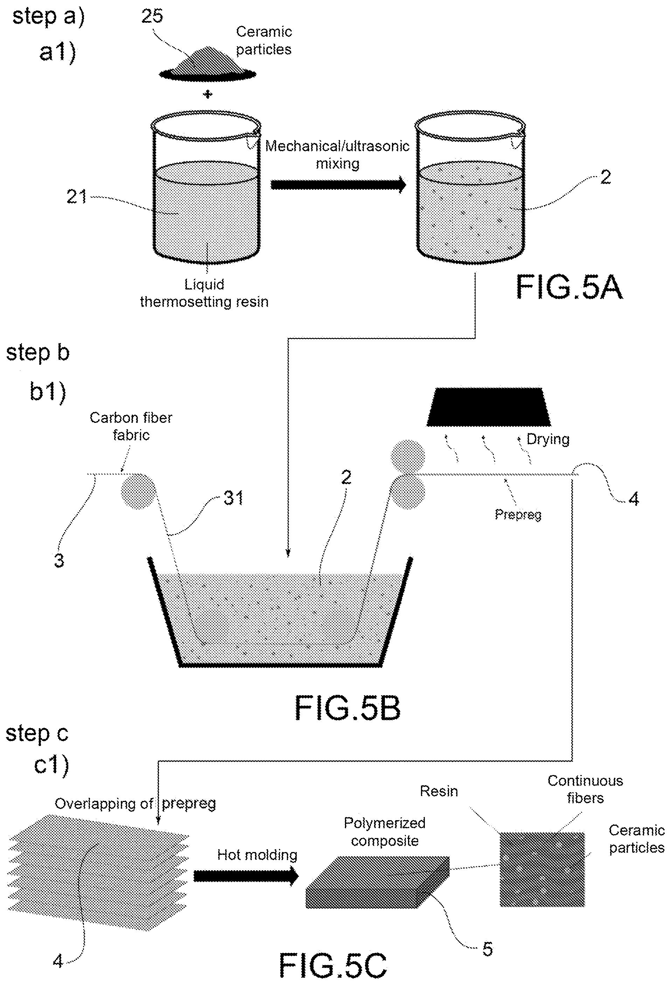

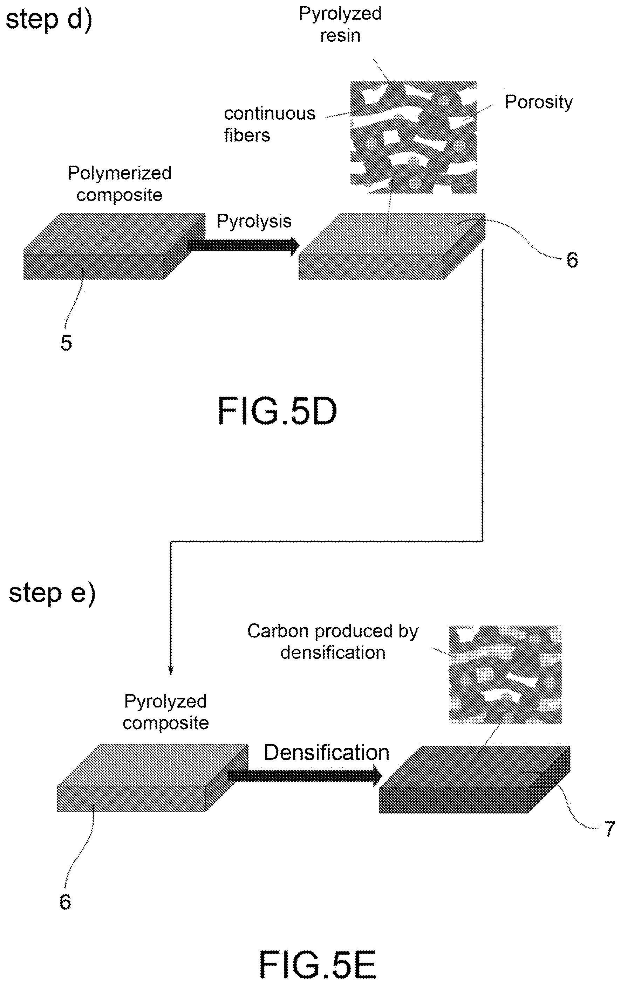

Fig. 5A to 5E show, each in an illustrative manner, a step of the sequence of steps of the method for manufacturing a brake pad preform according to a first embodiment of the present invention;

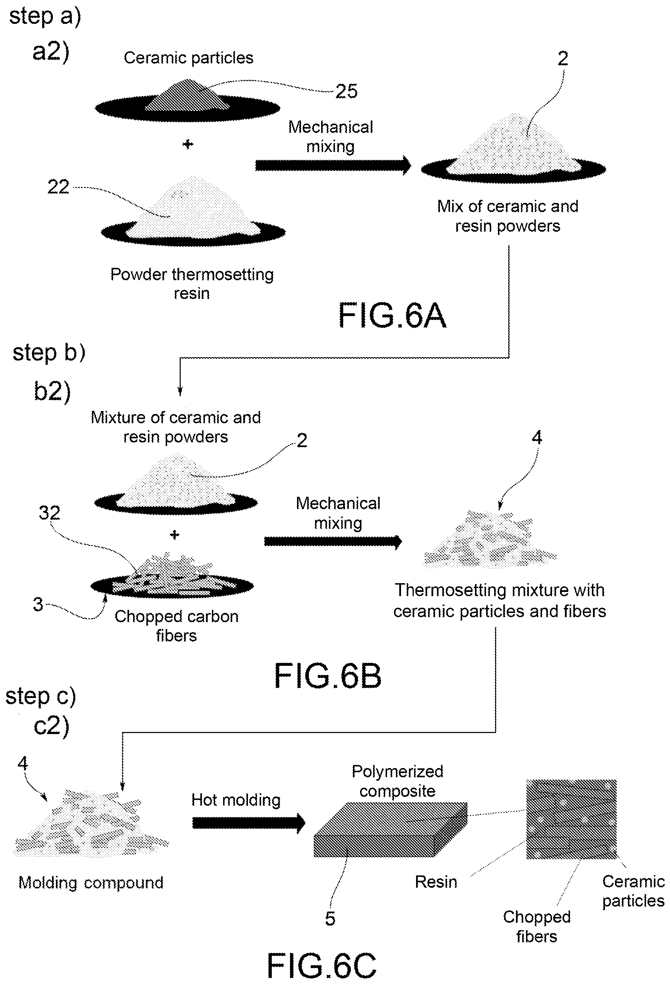

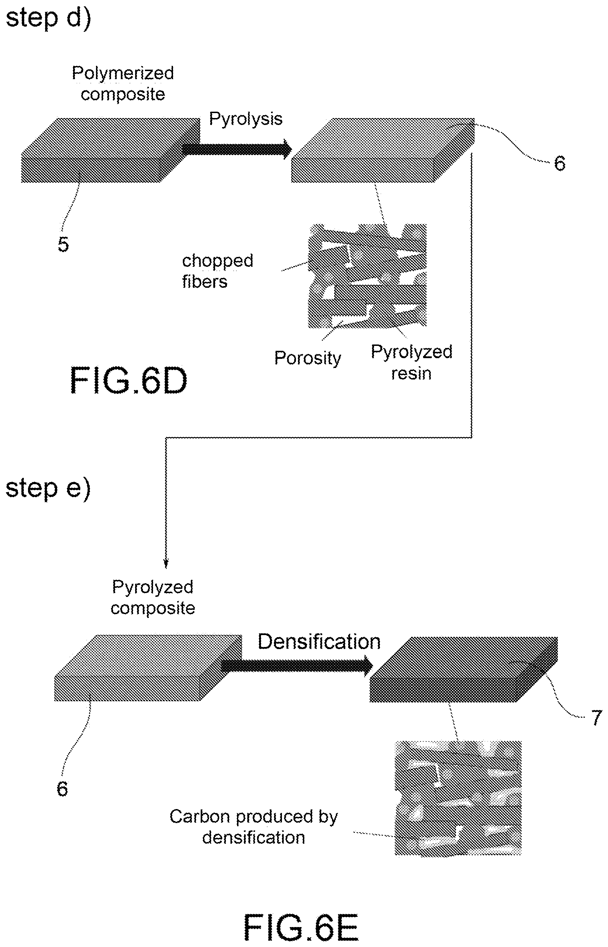

Fig. 6A to 6E show, each in an illustrative manner, a step of the sequence of steps of the method for manufacturing a brake pad preform according to a second embodiment of the present invention.

### Detailed description of the invention

With reference to the above figures, reference numeral 6 globally denotes a brake pad preform for a disc brake according to the present invention.

The present invention also relates to a brake pad 1 for a disc brake that is directly obtained from the brake pad preform 6, once any dry and/or wet finishing steps have been carried out on the brake pad preform, for example turning and milling to achieve the desired geometric design.

The brake pad 1 for disc brakes according to the invention is composed of a carbon-carbon composite, composed of a matrix of carbonaceous material and carbon fibers. In particular, ceramic particles are uniformly dispersed in the matrix of carbonaceous material.

According to an embodiment of the carbon-carbon composite, the volumetric concentration of ceramic particles in a volume of 5 mm³ varies within a limit of ±20% between two different randomly identified areas of the pad.

In order to obtain the aforesaid brake pad preform 6, the main object of the present invention is a method for manufacturing the brake pad preform 6 for disc brakes, which method comprises a series of operational steps which will be described in detail below. A general embodiment of the method for manufacturing the brake pad preform 6 for disc brakes provides for:
a) preparing a thermosetting mixture 2 by mixing a polymer resin in liquid form 21 or particle powder form 22 and ceramic particles 25 in powder form;
b) combining the thermosetting mixture 2 obtained in step a) with a carbonaceous material 3 composed of carbon fibers to obtain a molding compound 4;
c) molding the molding compound 4 obtained in step b), for example in a mold for brake pads preforms, by means of compacting and heat treatment to obtain a crude preform 5 (or polymerized composite);
d) subjecting the crude preform 5 obtained in step c) to a pyrolysis treatment to obtain a brake pad preform 6.

According to an embodiment of the method, the polymeric resin in liquid form 21 or particle solid form 22 is composed of one or more of the resins selected from the group comprising: phenolic resin, acrylic resin, furan resin, isocyanate resin, polystyrene.

Preferably, the ceramic particles 25 of step a) comprise silicon carbide (SiC) and/or silicon nitride (Si3N4).

According to an advantageous embodiment of the method, the ceramic particles 25 of step a) have an average particle size comprised between 0.5 and 100 micrometers, preferably between 1 and 50 micrometers, even more preferably between 2 and 30 micrometers.

Preferably, step a) comprises the step of also mixing a dispersing agent, such as a polyacrylic acid compound or a polyethyleneimine compound, so as to improve the dispersion of the ceramic particles.

According to an embodiment, step a) further provides for the use of mechanical mixing treatments or ultrasound treatments to improve the disaggregation and dispersion of the ceramic particles 25.

According to an embodiment, the thermosetting mixture 2 is composed of 3% to 20% by weight of ceramic particles 25 in powder form relative to the total weight of the thermosetting mixture 2, preferably between 9 and 15% by weight of ceramic particles 25 in powder form relative to the total weight of the thermosetting mixture 2. On the basis of the content of ceramic particles 25, it is possible to modulate the frictional behavior of the material and optimize it for each application.

In particular, an embodiment in which the thermosetting mixture 2 is composed of at least 10% by weight of ceramic particles 25 in powder form relative to the total weight of the thermosetting mixture 2 allows friction to be favored at temperatures below 300 °C at the expense of higher temperatures.

According to a further embodiment in which the thermosetting mixture 2 is composed of at least 3% and at most 10% (extreme excluded) by weight of ceramic particles 25 in powder form relative to the total weight of the thermosetting mixture 2, the friction effect has a more balanced behavior even at temperatures higher than 300 °C.

It is clear that step b) of joining the thermosetting mixture 2 obtained in step a) with a carbonaceous material 3 composed of carbon fibers may take place in different ways, for example by immersion or by compaction or by mixing and the like.

According to an embodiment, the carbonaceous material 3 is composed of two-dimensional or substantially two-dimensional fabric layers 31, preferably layers of carbon fiber fabric. In this embodiment, step b) comprises the operational step of impregnating the two-dimensional fabric layers 31 with the thermosetting mixture 2 and joining the layers together to form the molding compound 4 to be molded in step c). In this case, the molding compound is also referred to as a prepreg.

According to an embodiment variant, the carbonaceous material 3 is composed of chopped carbon fibers 32. Preferably, in step b), after the chopped carbon fibers 32 have been joined to the thermosetting mixture 2 of step a), the molding compound 4 thus obtained is then subsequently formed by hot molding in step c) to form a crude preform 5 which is preferably polymeric (polymerized composite).

According to an advantageous embodiment, the carbonaceous compound 4 is composed of from 50% to 80% by weight of this carbonaceous material 3 and from 20% to 50% by weight of said thermosetting mixture 2, preferably from 65% to 75% by weight of said carbonaceous material 3 and from 25% to 35% by weight of said thermosetting mixture 2. This allows a sufficient quantity of resin 2 to be obtained to bind the carbonaceous material 3 and at the same time maintain as many carbonaceous fibers as possible to increase the mechanical resistance.

According to an embodiment, the step c) of molding the molding compound 4 comprises the following operational step c1) of compacting the molding compound 4 by means of a vacuum compaction technique, for example by means of vacuum bags.

Furthermore, preferably, the operational step c1) also comprises the step of also subjecting the molding compound 4 to an autoclave curing treatment. This embodiment is preferable in the case in which the carbonaceous compound 4 is composed of two-dimensional or substantially two-dimensional fabric layers 31.

In this embodiment, in step c1), the autoclave treatment is carried out at a pressure between 5 and 15 bar, extremes included.

According to an embodiment variant, the step c) of molding the molding compound 4 provides the operational step c2) of hot molding the molding compound 4 by means of molding in a uniaxial press. This embodiment is preferable in the case in which the carbonaceous compound is composed of chopped carbon fibers 32.

According to an embodiment, in step c2) the hot molding is performed at a pressure between 5 and 50 bar, extremes included.

Preferably, step c1) or step c2) are performed at a temperature comprised between 100 °C and 160 °C, extremes included, for at least 30 minutes. This allows a complete cross-linking of the polymeric resin to be obtained.

According to an embodiment, after step d), the method further comprises an operational step e) in which the brake pad preform 6 is subjected to a carbon densification process to obtain a densified pad preform 7, e.g., a densification process by means of a CVD (Chemical Vapor Deposition) technique, or CVI (Chemical Vapor Infiltration), or PIP (Polymer Infiltration and Pyrolysis), or PIP with pitch.

A first densification technique is CVD (Chemical Vapor Deposition) or CVI (Chemical Vapor Infiltration), depending on whether there is only a coating or an infiltration of carbon in the form of vapor. Typically, if the material is fibrous and therefore has a high porosity, it is called Chemical Vapor Infiltration (CVI). These methods involve the use of hydrocarbon mixtures (e.g. methane and propane) and the exposure of the material to be treated to these mixtures at high temperatures and low pressures. The operating temperatures are in the order of 900-1200 °C, preferably 1000-1100 °C, and pressures lower than 300 mbar, preferably from 10 to 100 mbar, are used. The hydrocarbon mixtures decompose, thus forming elemental carbon which is then deposited or infiltrated in the matrix of the material to be treated. This method, which requires the use of specially dedicated furnaces, involves the deposition of a thin layer (typically a few microns) on the fibers, whereby process times of tens to hundreds of hours are required to obtain the desired densification. In this way it is possible to achieve overall coverage on the fibers of more than ten microns (typically 10-20 microns).

A different method, known as LPI (Liquid Polymer Infiltration) or PIP (Polymer Infiltration and Pyrolysis) involves the infiltration of the matrix of the material to be treated with a liquid polymer and the subsequent high-temperature heat treatment (pyrolysis) which causes the carbonization of the polymer deposited on the carbon fibers. In this case, several infiltration and pyrolysis steps are required before obtaining an appropriate densification of the preform.

According to an embodiment, it is possible to use a combination of densification techniques, for example a combination of PIP and CVI techniques.

According to an embodiment, step e) comprises the step of densifying the brake pad preform 6 obtained in step d) until a density of the final material of at least 1.5 grams per cubic centimeter (g/cm³) is obtained, preferably greater than 1.65 grams per cubic centimeter (g/cm³).

These density values give the material of the densified brake pad preform 7 the appropriate characteristics of mechanical strength, thermal conductivity and wear resistance.

For the manufacture of the brake pad preform 6, the manufacturing method optionally also provides the following steps:
i) optionally, needling the two-dimensional or substantially two-dimensional layers of fabric, which are superimposed, to form an interwoven three-dimensional structure;
ii) optionally, needling the chopped fibers to form a three-dimensional interwoven structure.

Needling may be carried out with methods that provide for the use of special needles which engage part of the fibers by directing them axially to the pad, allowing three-dimensional structures to be obtained.

### First embodiment example

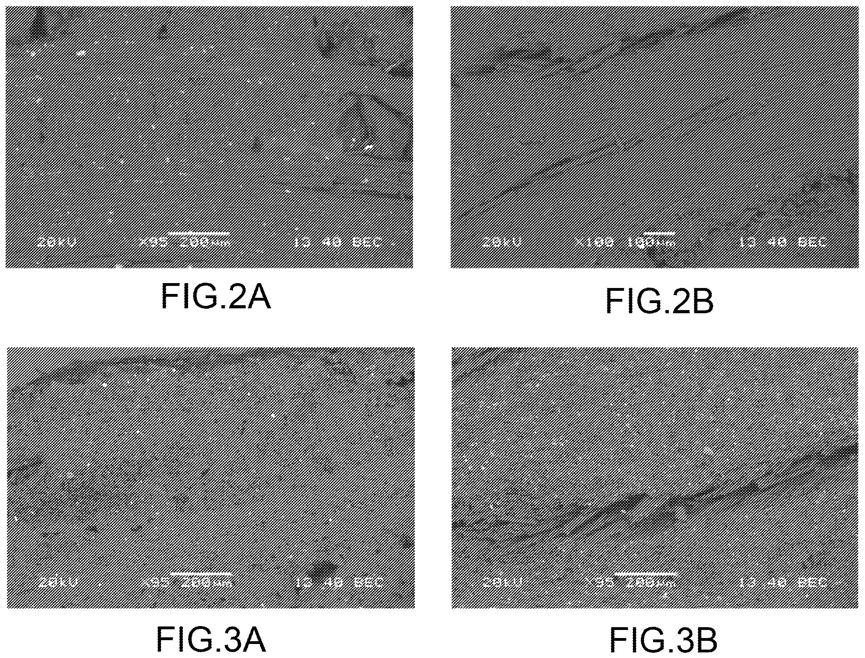

An embodiment example of a brake pad preform 6 obtained according to an embodiment of the method according to the present invention is described below, for which some detailed portions obtained by the SEM are shown in Fig. 3A and 3B.

The brake pad preform 6 according to this embodiment example was obtained by means of the following operational steps:
- a thermosetting mixture 2 was prepared by mixing an isocyanate polymer resin 22 in solid form with ceramic particles 25 of silicon carbide (Sic) in powder form, each ceramic particle having an average particle size of about 2 micrometers;
- the thermosetting mixture 2 obtained in step a) was combined with a carbonaceous material 3 composed of chopped carbon fibers 32 to obtain a molding compound 4.

The molding compound 4 obtained in this embodiment example is composed of 30% by weight of isocyanate polymer resin, 3% by weight of silicon carbide (Sic) ceramic particles and 67% by weight of chopped carbon fibers.

Subsequently, the aforementioned molding compound 4 was molded in a brake pad preform mold by compacting and heat treatment in a press, so as to obtain a crude preform 5.

Subsequently, the crude preform 5 was subjected to a pyrolysis treatment and a heat treatment to obtain a brake pad preform 6 in which a carbon-carbon compound is then formed.

Subsequently, the brake pad preform 6 was also subjected to a densification treatment by means of a CVI (Chemical Vapor Infiltration) densification technique, obtaining a densified brake pad preform 7.

Fig. 3A and 3B show the SEM images of the present embodiment example, which are easily comparable with the respective Fig. 2A and 2B which show SEM images of corresponding portions of a brake pad preform 6 obtained with a method according to the prior art. In the images, the silicon carbide (SiC) particles correspond to the lighter points (in white/light gray) compared to the background.

The comparison between the images clearly demonstrates that in Fig. 3A and 3B (i.e. in the present invention), there is no significant reduction in the density of silicon carbide (SiC) particles in the transition from the surface region of the preform (Fig. 3A) to the deeper area of the preform (Fig. 3B).

On the contrary, in the preform made with the known technique, Fig. 2B shows an evident reduction in density of the silicon carbide particles with respect to Fig. 2A, relating to the most superficial portion of the preform.

As may be appreciated from what has been described, the brake pad preform 6, the brake pad 1 and the related manufacturing methods of this preform 6 and brake pad 1 of the present invention allow the drawbacks presented in the prior art to be overcome.

In particular, the present invention provides a method for manufacturing a carbon-carbon composite doped with ceramic particles uniformly dispersed in the matrix of carbonaceous material, which composite is capable of guaranteeing constant braking performance regardless of pad wear.

Furthermore, advantageously, since the method according to the present invention does not require high conversion temperatures of the silicon oxide into silicon carbide during the infiltration process, it is more efficient than the methods of the prior art, both since it does not require the use of high temperatures and since it reduces the risk of formation of silicon oxide deposit on the cold portions of the machinery used in the process. Furthermore, the use of SiC particles, instead of silica that has to be transformed, allows the size of the introduced powders to be controlled, which are otherwise influenced by the heat treatment necessary for their conversion.

It is clear that a person skilled in the art may make several changes and adjustments to the pad preform, to the pad and to the methods described above in order to meet specific and incidental needs, which changes all fall within the scope of protection defined in the appended claims.

## Claims

1. A method for manufacturing a brake pad preform (6) for disc brakes, comprising the following operational steps:
a) preparing a thermosetting mixture (2) by mixing a polymer resin in liquid form (21) or particle powder form (22) and ceramic particles (25) in powder form;
b) combining the thermosetting mixture (2) obtained in step a) with a carbonaceous material (3) composed of carbon fibers to obtain a molding compound (4);
c) molding the molding compound (4) obtained in step b) by means of compacting and heat treatment to obtain a crude preform (5);
d) subjecting the crude preform (5) obtained in step d) to a pyrolysis treatment to obtain a brake pad preform (6).

2. Method according to claim **1,** wherein the polymeric resin in liquid form (21) or particle solid form (22) is composed of one or more of the resins selected from the group comprising: phenolic resin, acrylic resin, furan resin, isocyanate resin, polystyrene.

3. Method according to claim 1 or **2,** wherein the ceramic particles (25) of step a) comprise silicon carbide (SiC) and/or silicon nitride (Si3N4).

4. Method according to any one of the preceding claims, wherein the ceramic particles (25) of step a) have an average particle size comprised between 0.5 and 100 micrometers, preferably between 1 and 50 micrometers, even more preferably between 2 and 30 micrometers.

5. Method according to any one of the preceding claims, wherein the thermosetting mixture (2) is composed of from 3% to 20% by weight of ceramic particles (25) in powder form relative to the total weight of the thermosetting mixture, preferably between 9 and 15% by weight of ceramic particles in powder form relative to the total weight of the thermosetting mixture.

6. Method according to any one of the preceding claims, wherein step a) further comprises the step of mixing a dispersing agent, preferably a polyacrylic acid compound or polyethyleneimine compound.

7. Method according to any one of the preceding claims, wherein the carbonaceous material (3) is composed of two-dimensional fabric layers (31) and step b) comprises the operational step of impregnating the two-dimensional fabric layers (31) with the thermosetting mixture (2) and joining the layers together to form the molding compound to be molded in step c).

8. Method according to claim 7, wherein the carbonaceous compound (3) is composed of from 50% to 80% by weight of said carbonaceous material and from 20% to 50% by weight of said thermosetting mixture (2), preferably from 65% to 75% by weight of said carbonaceous material and from 25% to 35% by weight of said thermosetting mixture.

9. Method according to any one of the claims from 1 to 6, wherein the carbonaceous material (3) comprises chopped carbon fibers (32).

10. Method according to any one of the preceding claims, wherein step c) of molding the molding compound (4) comprises the following operational step:
c1) compacting the molding compound (4) by means of a vacuum compaction technique, e.g., by means of vacuum bags, and also subjecting the molding compound to an autoclave curing treatment;
c2) hot molding the molding compound (4) by means of molding in a uniaxial press.

11. Method according to claim 10, wherein step c1) or step c2) are performed at a temperature comprised between 100°C and 160°C, extremes included, for at least 30 minutes.

12. Method according to claim 10 or 11, wherein in step c1) the hot molding is performed at a pressure comprised between 5 and 50 bar, extremes included, and in step c2) the autoclave treatment is performed at a pressure between 5 and 15 bar, extremes included.

13. Method according to any one of the preceding claims, wherein after step d), the method further comprises an operational step e) in which the brake pad preform (6) is subjected to a carbon densification process, e.g., a densification process by means of a CVD (Chemical Vapor Deposition) technique, or CVI (Chemical Vapor Infiltration), or PIP (Polymer Infiltration and Pyrolysis), or pitch impregnation, to obtain a densified brake pad preform (7).

14. A method of making a brake pad (1) for a disc brake comprising a method for manufacturing a brake pad preform (6) according to any one of the preceding claims, and an operational step of subjecting the brake pad preform (6) to dry and/or wet finishing.

15. A brake pad (1) for disc brakes, composed of a carbon-carbon composite, composed of a matrix of carbonaceous material and carbon fibers, wherein ceramic particles are uniformly dispersed in the carbonaceous material matrix, wherein the volumetric concentration of ceramic particles in a volume of 5 mm³ varies within a limit of ±20% between two different randomly identified areas of the pad.

## Patentansprüche

1. Verfahren zur Herstellung einer Bremsbelagvorform (6) für Scheibenbremsen, umfassend die folgenden Arbeitsschritte:
a) Vorbereiten einer duroplastischen Mischung (2) durch Mischen eines Polymerharzes in flüssiger Form (21) oder in Partikelpulverform (22) und keramischer Partikel (25) in Pulverform;
b) Kombinieren der duroplastischen Mischung (2), die in Schritt a) erhalten wird, mit einem kohlenstoffhaltigen Material (3), das aus Kohlenstofffasern besteht, um eine Formenverbindung (4) zu erhalten;
c) Formen der Formenverbindung (4), die in Schritt b) erhalten wird, mittels Verdichtung und Wärmebehandlung, um eine Rohvorform (5) zu erhalten;
d) Unterziehen der Rohvorform (5), die in Schritt d) erhalten wird, einer Pyrolysebehandlung, um eine Bremsbelagvorform (6) zu erhalten.

2. Verfahren nach Anspruch 1, wobei das Polymerharz in flüssiger Form (21) oder in fester Partikelform (22) aus einem oder mehreren der Harze besteht, die aus der Gruppe bestehend aus: Phenolharz, Acrylharz, Furanharz, Isocyanatharz, Polystyrol, ausgewählt werden.

3. Verfahren nach Anspruch 1 oder 2, wobei die keramischen Partikel (25) des Schrittes a) Siliciumkarbid (SiC) und/oder Siliciumnitrid (Si3N4) umfassen.

4. Verfahren nach einem der vorhergehenden Ansprüche, wobei die keramischen Partikel (25) des Schrittes a) eine durchschnittliche Partikelgröße zwischen 0,5 und 100 Mikrometern, vorzugsweise zwischen 1 und 50 Mikrometern, noch bevorzugter zwischen 2 und 30 Mikrometern aufweisen.

5. Verfahren nach einem der vorhergehenden Ansprüche, wobei die duroplastische Mischung (2) aus 3 % bis 20 % Gewichtsprozent keramischer Partikel (25) in Pulverform bezogen auf das Gesamtgewicht der duroplastischen Mischung, vorzugsweise zwischen 9 % und 15 % Gewichtsprozent keramischer Partikel in Pulverform bezogen auf das Gesamtgewicht der duroplastischen Mischung besteht.

6. Verfahren nach einem der vorhergehenden Ansprüche, wobei Schritt a) ferner den Schritt des Mischens eines Dispergiermittels umfasst, vorzugsweise einer Polyacrylsäureverbindung oder einer Polyethyleniminverbindung.

7. Verfahren nach einem der vorhergehenden Ansprüche, wobei das kohlenstoffhaltige Material (3) aus zweidimensionalen Gewebeschichten (31) besteht und Schritt b) den Arbeitsschritt des Imprägnierens der zweidimensionalen Gewebeschichten (31) mit der duroplastischen Mischung (2) und des Verbindens der Schichten miteinander umfasst, um die in Schritt c) zu formende Formenverbindung zu bilden.

8. Verfahren nach Anspruch 7, wobei die kohlenstoffhaltige Verbindung (3) aus 50 % bis 80 % Gewichtsprozent des kohlenstoffhaltigen Materials und aus 20 % bis 50 % Gewichtsprozent der duroplastischen Mischung (2), vorzugsweise aus 65 % bis 75 % Gewichtsprozent des kohlenstoffhaltigen Materials und aus 25 % bis 35 % Gewichtsprozent der duroplastischen Mischung besteht.

9. Verfahren nach einem der Ansprüche 1 bis 6, wobei das kohlenstoffhaltige Material (3) geschnittene Kohlenstofffasern (32) umfasst.

10. Verfahren nach einem der vorhergehenden Ansprüche, wobei Schritt c) des Formens der Formenverbindung (4) den folgenden Arbeitsschritt umfasst:
c1) Verdichten der Formenverbindung (4) mittels einer Vakuumverdichtungstechnik, z. B. mittels Vakuumbeuteln, und außerdem Unterziehen der Formenverbindung einer Druckkessel-Härtungsbehandlung;
c2) Heißformen der Formenverbindung (4) mittels Formen in einer einachsigen Presse.

11. Verfahren nach Anspruch 10, wobei Schritt c1) oder Schritt c2) bei einer Temperatur zwischen 100 °C und 160 °C, einschließlich Extremwerte, für mindestens 30 Minuten durchgeführt wird.

12. Verfahren nach Anspruch 10 oder 11, wobei in dem Schritt c1) das Heißformen bei einem Druck zwischen 5 und 50 bar, einschließlich Extremwerte, durchgeführt wird, und in dem Schritt c2) die Druckkessel-Behandlung bei einem Druck zwischen 5 und 15 bar, einschließlich Extremwerte, durchgeführt wird.

13. Verfahren nach einem der vorhergehenden Ansprüche, wobei nach Schritt d) das Verfahren ferner einen Arbeitsschritt e) umfasst, in dem der Bremsbelagvorform (6) einem Kohlenstoffverdichtungsverfahren unterzogen wird, z. B. einem Verdichtungsverfahren mittels eines CVD-Verfahrens (Chemische Dampfabscheidung), CVI-Verfahrens (Chemische Dampfinfiltration), oder PIP-Verfahrens (Polymer Infiltration und Pyrolysis), oder Pechimprägnierung, um einen verdichteten Bremsbelagvorform (7) zu erhalten.

14. Verfahren zur Herstellung eines Bremsbelags (1) für eine Scheibenbremse, umfassend ein Verfahren zur Herstellung einer Bremsbelagvorform (6) nach einem der vorhergehenden Ansprüche und einen Arbeitsschritt des Unterziehens der Bremsbelagvorform (6) einer .Trocken und/oder Naßfeinbearbeitung.

15. Bremsbelag (1) für Scheibenbremsen, bestehend aus einem Kohlenstoff-Kohlenstoff-Gemisch, bestehend aus einer Matrix aus kohlenstoffhaltigem Material und Kohlenstofffasern, wobei keramische Partikel gleichmäßig in der Matrix des kohlenstoffhaltigen Materials dispergiert sind, wobei die volumetrische Konzentration keramischer Partikel in einem Volumen von 5 mm³ innerhalb einer Grenze von ±20 % zwischen zwei verschiedenen zufällig identifizierten Bereichen des Belags ändert.

## Revendications

1. Procédé de fabrication d'une préforme (6) de plaquette de frein pour freins à disque, comprenant les étapes opérationnelles suivantes :
a) préparation d'un mélange thermodurcissable (2) par mélange d'une
résine polymère sous forme liquide (21) ou sous forme de poudre particulaire (22) et de particules céramiques (25) sous forme de poudre ;
b) association du mélange thermodurcissable (2) obtenu à l'étape a) avec un matériau carboné (3) composé de fibres de carbone pour obtenir une masse de moulage (4) ;
c) moulage de la masse de moulage (4) obtenue à l'étape b) par compactage et traitement thermique pour obtenir une préforme brute (5) ;
d) soumission de la préforme brute (5) obtenue à l'étape d) à un traitement de pyrolyse pour obtenir une préforme (6) de plaquette de frein.

2. Procédé selon la revendication 1, dans lequel la résine polymère sous forme liquide (21) ou sous forme solide particulaire (22) est composée d'une ou plusieurs résines sélectionnées dans le groupe comprenant : résine phénolique, résine acrylique, résine furanne, résine isocyanate, polystyrène.

3. Procédé selon la revendication 1 ou 2, dans lequel les particules céramiques (25) de l'étape a) comprennent du carbure de silicium (SiC) et/ou du nitrure de silicium (Si3N4).

4. Procédé selon l'une quelconque des revendications précédentes, dans lequel les particules céramiques (25) de l'étape a) présentent une taille moyenne de particule comprise entre 0,5 et 100 micromètres, de préférence entre 1 et 50 micromètres, encore plus préférablement entre 2 et 30 micromètres.

5. Procédé selon l'une quelconque des revendications précédentes, dans lequel le mélange thermodurcissable (2) est composé de 3 % à 20 % en poids de particules céramiques (25) sous forme de poudre par rapport au poids total du mélange thermodurcissable, de préférence entre 9 % et 15 % en poids de particules céramiques sous forme de poudre par rapport au poids total du mélange thermodurcissable.

6. Procédé selon l'une quelconque des revendications précédentes, dans lequel l'étape a) comprend en outre l'étape de mélange d'un agent dispersant, de préférence un composé d'acide polyacrylique ou un composé de polyéthylèneimine.

7. Procédé selon l'une quelconque des revendications précédentes, dans lequel le matériau carboné (3) est composé de couches de tissu bidimensionnelles (31) et l'étape b) comprend l'étape opérationnelle d'imprégnation des couches de tissu bidimensionnelles (31) avec le mélange thermodurcissable (2) et d'assemblage des couches entre elles pour former la masse de moulage à mouler à l'étape c).

8. Procédé selon la revendication 7, dans lequel le composé carboné (3) est composé de 50 % à 80 % en poids dudit matériau carboné et de 20 % à 50 % en poids dudit mélange thermodurcissable (2), de préférence de 65 % à 75 % en poids dudit matériau carboné et de 25 % à 35 % en poids dudit mélange thermodurcissable.

9. Procédé selon l'une quelconque des revendications 1 à 6, dans lequel le matériau carboné (3) comprend des fibres de carbone hachées (32).

10. Procédé selon l'une quelconque des revendications précédentes, dans lequel l'étape c) de moulage de la masse de moulage (4) comprend l'étape opérationnelle suivante:
c1) compactage de la masse de moulage (4) au moyen d'une technique de compactage sous vide, par exemple, au moyen de sacs sous vide, et également soumission de la masse de moulage à un traitement de durcissement en autoclave ;
c2) moulage à chaud de la masse de moulage (4) par moulage dans une presse uniaxiale.

11. Procédé selon la revendication 10, dans lequel l'étape c1) ou l'étape c2) est réalisée à une température comprise entre 100 °C et 160 °C, extrêmes inclus, pendant au moins 30 minutes.

12. Procédé selon la revendication 10 ou 11, dans lequel à l'étape c1), le moulage à chaud est effectué à une pression comprise entre 5 et 50 bars, extrêmes inclus, et à l'étape c2), le traitement en autoclave est effectué à une pression comprise entre 5 et 15 bars, extrêmes inclus.

13. Procédé selon l'une quelconque des revendications précédentes, dans lequel, après l'étape d), le procédé comprend en outre une étape opérationnelle e) dans laquelle la préforme (6) de plaquette de frein est soumise à un procédé de densification en carbone, par exemple, un procédé de densification par une technique de déposition chimique en phase vapeur (CVD - Chemical Vapor Deposition), ou d'infiltration chimique en phase vapeur (CVI - Chemical Vapor Infiltration), ou par infiltration de précurseurs polymères et pyrolyse (PIP - Polymer Infiltration and Pyrolysis), ou par imprégnation avec du brai, pour obtenir une préforme (7) de plaquette de frein densifiée.

14. Procédé de fabrication d'une plaquette de frein (1) pour frein à disque, comprenant un procédé de fabrication d'une préforme (6) de plaquette de frein selon l'une quelconque des revendications précédentes, et une étape opérationnelle consistant à soumettre la préforme (6) de plaquette de frein à une finition à sec et/ou humide.

15. Plaquette de frein (1) pour freins à disque, composée d'un composite carbone-carbone, constitué d'une matrice de matériau carboné et de fibres de carbone, dans laquelle des particules céramiques sont uniformément dispersées dans la matrice de matériau carboné, dans laquelle la concentration volumique de particules céramiques dans un volume de 5 mm³ varie dans une limite de ±20 % entre deux zones différentes identifiées de manière aléatoire de la plaquette.
